# EUROPÄISCHE PATENTSCHRIFT

(11) **EP 3 799 448 B1**
(45) Veröffentlichungstag und Bekanntmachung des Hinweises auf die Patenterteilung: **25.10.2023**
(21) Anmeldenummer: 20191839.8
(22) Anmeldetag: 20.08.2020
(51) Int. Cl.: H04W 4/40, G06F 9/54, G06F 9/50, G06F 11/30, H04W 24/10

(54) **VERIFIZIERUNGSEINRICHTUNG, VERFAHREN UND VERWENDUNG DER VERIFIZIERUNGSEINRICHTUNG**
VERIFICATION DEVICE, METHOD AND USE OF THE VERIFICATION DEVICE
DISPOSITIF DE VÉRIFICATION, PROCÉDÉ ET UTILISATION DU DISPOSITIF DE VÉRIFICATION

(30) Priorität: 26.09.2019 US 201916583566
(43) Veröffentlichungstag der Anmeldung: 31.03.2021
(73) Patentinhaber: Continental Automotive Systems, Inc., Auburn Hills MI 48326 (US)
(72) Erfinder: Stählin, Ulrich, 90411 Nürnberg (DE)
(74) Vertreter: Continental Corporation

(56) Entgegenhaltungen:
- US-A1- 2005 136 892
- US-A1- 2012 254 632
- US-A1- 2017 188 310
- US-A1- 2019 143 915
- ZHENGMING LI ET AL: "On Resource-Aware Message Verification in VANETs", COMMUNICATIONS (ICC), 2010 IEEE INTERNATIONAL CONFERENCE ON, IEEE, PISCATAWAY, NJ, USA, 23. Mai 2010 (2010-05-23), Seiten 1-6, XP031703028, ISBN: 978-1-4244-6402-9

## Beschreibung

Die vorliegende Erfindung betrifft eine Verifizierungseinrichtung, eine Vorrichtung zur Fahrzeug-zu-X Kommunikation, ein korrespondierendes Verfahren sowie die Verwendung der Vorrichtung bzw. Verifizierungseinrichtung.

Aufgrund der für Fahrzeug-zu-X (V2X) Kommunikation vorgesehenen vergleichsweise hohen Frequenz von beispielsweise 5,9 GHz besteht das grundsätzliche Bestreben den V2X Chipsatz, umfassend die zum Betrieb der V2X Antenne erforderlichen elektronischen Komponenten sowie eine Recheneinrichtung zur Verarbeitung mittels V2X Kommunikation empfangener bzw. auszusendender Daten, räumlich möglichst nah bzw. mit möglichst kurzem Signalübertragungsweg an die Antenne anzubinden, damit Störungen bzw. Leitungsverluste in diesem Bereich der Übertragungsstrecke minimiert werden können. Aufgrund der typischerweise hohen Temperaturen nahe der Antenne wären die Hochfrequenzkomponenten zur Übertragung der V2X Signale bei räumlicher Nähe zum V2X Chipsatz jedoch einer für diese nicht kompatiblen Temperatur ausgesetzt.

Die US 2019 143 915 A1 betrifft eine Telematikvorrichtung eines Fahrzeugs, umfassend: einen Temperatursensor, der dazu konfiguriert ist, die Temperatur des Telematikgeräts zu erfassen; und ein Prozessor in Kommunikation mit dem Temperatursensor, der programmiert ist, eine Over-the-Air Softwareaktualisierungsfunktionalität als Reaktion darauf, dass die Temperatur einen ersten vordefinierten Schwellenwert überschreitet, zu deaktivieren und eine Hotspot-Funktionalität als Reaktion darauf, dass die Temperatur einen zweiten vordefinierten Schwellenwert überschreitet, zu deaktivieren und eine Ferndienstfunktionalität als Reaktion darauf, dass die Temperatur einen dritten vordefinierten Schwellenwert überschreitet, zu deaktivieren.

Die US 2012 254 632 A1 betrifft ein System zum Steuern einer Netzzugangsvorrichtung in einem Fahrzeug, umfassend: einen Prozessor, der konfiguriert ist, um über die Kommunikationsverbindung mit der Netzzugangsvorrichtung zu kommunizieren; und eine Steuerschaltung, die konfiguriert ist, um eine Temperatur der Netzzugangsvorrichtung zu überwachen und die Stromversorgung der Netzzugangsvorrichtung basierend auf der Temperatur zu steuern.

Aufgabe der Erfindung ist es ein Mittel bereitzustellen, welches die oben genannten Probleme überwindet und dabei dennoch die erstrebte kurze Anbindung des V2X Chipsatzes an die Antenne ermöglicht.

Diese Aufgabe wird durch die Gegenstände der unabhängigen Ansprüche gelöst. Vorteilhafte Ausgestaltungen können beispielsweise den Unteransprüchen entnommen werden. Der Inhalt der Ansprüche wird durch ausdrückliche Inbezugnahme zum Inhalt der Beschreibung gemacht.

Die Erfindung beschreibt eine Verifizierungseinrichtung für eine Fahrzeug-zu-X, V2X, Kommunikationsvorrichtung, ausgebildet empfangene V2X Nachrichten zu verifizieren und konfiguriert eine Anzahl zu verifizierender empfangener V2X Nachrichten in Abhängigkeit eines ermittelten Temperaturwerts der V2X Kommunikationsvorrichtung zu bestimmen und die Verifizierung der bestimmten Anzahl zu verifizierender empfangener V2X Nachrichten vorzunehmen. Verifizierte empfangene V2X Nachrichten werden zweckmäßigerweise durch eine Recheneinrichtung der V2X Kommunikationsvorrichtung weiterverarbeitet und nicht verifizierte empfangene V2X Nachrichten können beispielsweise verworfen und somit nicht weiter verarbeitet werden.

Hierbei wurde erkannt, dass eine Verifizierungseinrichtung erheblich zur Eigenerwärmung des V2X Chipsatzes einer V2X Kommunikationsvorrichtung beiträgt. Grundsätzlich wird die Eigenerwärmung der Verifizierungseinrichtung und somit die Temperaturentwicklung wesentlich durch die aktuell eingesetzten Rechenressourcen bzw. den aktuell eingesetzten Rechenaufwand der Verifizierungseinrichtung bestimmt. Der Erfindung liegt also der Gedanke zugrunde die genannte Aufgabe durch Verringerung der Eigenerwärmung des V2X Chipsatzes im laufenden Betrieb durch Anpassung der für die Verifizierung empfangener V2X Nachrichten erforderlichen Rechenressourcen der Verifizierungseinrichtung zu erzielen.

Damit kann eine kurze Anbindung des V2X Chipsatzes an die Antenne ermöglicht werden ohne insbesondere die Hochfrequenzkomponenten einer für diese nicht kompatiblen Temperatur auszusetzen. Beispielsweise lässt sich somit eine Abschaltung der Vorrichtung zur V2X Kommunikation bzw. Teile hiervon oder eine Reduzierung der Sendeleistung zur Erreichung eines vergleichbaren Effekts vermeiden. Ein auf Informationen der V2X Kommunikation angewiesener Funktionsumfang eines zugrundeliegenden Systems, z.B. eines Fahrzeugs, braucht ebenfalls nicht eingeschränkt zu werden, sodass ein Nutzer des zugrundeliegenden Systems keine Einschränkungen des Funktionsumfangs wahrnehmen braucht. Des Weiteren werden erhöhte Kosten für mögliche Kühlmaßnahmen zur Erreichung eines vergleichbaren Effekts vermieden.

Die Implementierung einer Ausführungsform der Erfindung ist hierbei unabhängig davon, welche der Komponenten der Vorrichtung zur V2X Kommunikation, insbesondere V2X Transceiver, Recheneinrichtung zur Verarbeitung auszusendender und/oder empfangener V2X Nachrichten oder ein anderer Chip, die Verifizierungseinrichtung umfasst oder realisiert, da die Komponenten üblicherweise durch ein gemeinsames Gehäuse der V2X Vorrichtung eingefasst sind und die Temperatur innerhalb des Gehäuses für die Zwecke der Erfindung als im wesentlichen gleich angenommen werden kann. In Ergänzung oder alternativ kann der Temperaturwert an einem bzw. für einen für die Erfindung relevanten Ort bzw. Raum ermittelt werden.

Entsprechend einer Ausführungsform ist die Verifizierungseinrichtung konfiguriert, die für die Verifizierung empfangener V2X Nachrichten eingesetzten Rechenressourcen der Verifizierungseinrichtung in Abhängigkeit des ermittelten Temperaturwerts anzupassen.

Entsprechend einer Ausführungsform ist die Verifizierungseinrichtung konfiguriert die für die Verifizierung empfangener V2X Nachrichten eingesetzten Rechenressourcen reziprok zum ermittelten Temperaturwert anzupassen. Weiterbildungsgemäß werden die eingesetzten Rechenressourcen somit bei steigendem ermitteltem Temperaturwert in der Weise angepasst, dass die Anzahl der zu verifizieren empfangenden V2X Nachrichten reduziert wird. Dementsprechend werden die eingesetzten Rechenressourcen bei sinkendem ermitteltem Temperaturwert in der Weise angepasst, dass die Anzahl der zu verifizierenden empfangenen V2X Nachrichten erhöht wird.

Entsprechend einer Ausführungsform ist die Verifizierungseinrichtung konfiguriert die für die Verifizierung empfangener V2X Nachrichten eingesetzten Rechenressourcen durch Änderung der Anzahl zu verifizierender empfangener V2X Nachrichten innerhalb eines Zeitintervalls bezogen auf eine Gesamtanzahl empfangener V2X Nachrichten innerhalb des Zeitintervalls vorzunehmen.

Entsprechend einer Ausführungsform ist die Verifizierungseinrichtung konfiguriert die Anzahl der verifizierten empfangenen V2X Nachrichten innerhalb eines Zeitintervalls bezogen auf eine Gesamtanzahl empfangener V2X Nachrichten innerhalb des Zeitintervalls reziprok zum ermittelten Temperaturwert anzupassen.

Entsprechend einer Ausführungsform ist die Verifizierungseinrichtung konfiguriert die Änderung der Anzahl verifizierter empfangener V2X Nachrichten innerhalb eines Zeitintervalls bezogen auf eine Gesamtanzahl empfangener V2X Nachrichten innerhalb des Zeitintervalls durch Änderung eines ausgeführten Verifizierungsschemas vorzunehmen.

Entsprechend einer Ausführungsform ist die Verifizierungseinrichtung konfiguriert ein erstes Verifizierungsschema oder ein zweites Verifizierungsschema auszuführen, wobei bei der Ausführung des ersten Verifizierungsschemas im Vergleich zum zweiten Verifizierungsschema eine größere Anzahl zu verifizierender empfangener V2X Nachrichten innerhalb eines Zeitintervalls bezogen auf eine Gesamtanzahl empfangener V2X Nachrichten innerhalb des Zeitintervalls verifiziert wird, und wobei die Verifizierungseinrichtung konfiguriert ist, von der Ausführung des ersten Verifizierungsschemas zur Ausführung in das zweite Verifizierungsschema zu wechseln, wenn ein ermittelter Temperaturwert einen vorgegebenen ersten Temperaturschwellwert überschreitet.

Insbesondere ist das erste Verifizierungsschema im Vergleich zum zweiten Verifizierungsschema somit überwiegend ressourcenaufwändiger, womit die Eigenerwärmung üblicherweise höher ausfällt.

Entsprechend einer Ausführungsform ist die Vorrichtung konfiguriert in das erste Verifizierungsschema zu wechseln, wenn der Temperaturwert einen vorgegebenen zweiten Temperaturschwellwert unterschreitet. Der erste Schwellwert und der zweite Temperaturschwellwert können hierbei identisch sein und/oder sich auf einen übereinstimmenden Temperaturwert beziehen. Im Falle, dass erste Temperaturschwellwert und der zweite Temperaturschwellwert nicht übereinstimmen, ist es zweckmäßig, dass der zweite Temperaturschwellwert im Vergleich zum ersten Temperaturschwellwert einen niedrigeren Temperaturwert beschreibt. Auseinanderliegende Temperaturwerte für den ersten und zweiten Temperaturschwellwert können bei Bedarf eine Frequenz eines Umschaltens zwischen dem ersten und zweiten Verifizierungsschema beeinflussen lassen, wobei mit wachsendem Temperaturwertabstand der Temperaturschwellwert sich insbesondere längere Zeitdauern zwischen den Umschaltungen der Verifizierungsschemata ergeben.

Weiterbildungsgemäß ist durch die Verifizierungseinrichtung als erstes Verifizierungsschema ausführbar:
- Verifizierung sämtlicher eingehender V2X Nachrichten ("Verify-All"), und
als erstes Verifizierungsschema oder als zweites Verifizierungsschema ausführbar:
- Verifizierung lediglich des Teils der eingehenden V2X Nachrichten, welche eine oder mehrere vorbestimmte Bedingungen erfüllen ("Verify-on-Demand") und/oder
- Verifizierung eingehender V2X Nachrichten auf Basis zumindest einer anderen auf den Nachrichteninhalt bezogenen Vorgehensweise ("Smart-Verify").
Einschränkungen bei der Zuordnung, des jeweils ausgeführten ersten bzw. zweiten Verifizierungsschemas, ergeben sich insbesondere daraus, dass das erste Verifizierungsschema im Vergleich zum zweiten Verifizierungsschema das ressourcenaufwändigere darstellt. Die Verifizierungsschemata sind in unterschiedlicher Weise realisierbar. Beispielsweise kann die Auswahl der zu verifizierenden V2X Nachrichten anhand von Priorisierungsinformationen, welche durch die V2X Nachrichten umfasst sein können, erfolgen, wobei eine Temperaturabhängigkeit der Verifizierung im Sinne der Erfindung in der Weise umsetzbar ist, dass bei steigender Temperatur lediglich höher priorisierte V2X Nachrichten verifiziert werden.

Weiterbildungsgemäß ist die Vorrichtung konfiguriert den Temperaturwert mittels einer Temperaturerfassungseinrichtung und/oder unter Heranziehung zumindest eines weiteren Größenwerts zumindest einer physikalischen Größe, welche insbesondere mittels einer dafür geeigneten Messeinrichtung erfassbar ist, zu ermitteln. Der Temperaturwert kann sich somit beispielsweise auch aus einem oder mehreren Größenwerten einer oder mehrerer physikalischer Größen ermittelt werden. Zweckmäßigerweise steht der oder die Größenwerte in einem abbildbaren Zusammenhang zur Temperatur am relevanten Ort bzw. im relevanten Raum.

Weiterbildungsgemäß ist die Vorrichtung konfiguriert eine Temperatur und/oder Leistungsaufnahme und/oder Stromaufnahme der Verifizierungseinrichtung zur Ermittlung des Temperaturwert heranzuziehen. Beispielsweise kann eine Temperaturbestimmung unter Heranziehung einer berechneten Leistungsaufnahme, auf Basis einer Spannung und eines Stromverbrauchs des V2X Chipsatzes oder einer oder mehrerer Komponenten hiervon, vorgenommen werden, wenn ein abbildbarer Zusammenhang besteht.

Die Erfindung betrifft weiterhin eine Fahrzeug-zu-X (V2X) Kommunikationsvorrichtung, umfassend eine Empfangseinrichtung zum Empfang von V2X Nachrichten, z.B. aufweisend einen V2X Transceiver, eine Recheneinrichtung zur Verarbeitung empfangener und/oder auszusendender V2X Nachrichten, eine Temperaturerfassungseinrichtung und eine Verifizierungseinrichtung gemäß einer Ausführungsform der Erfindung. Die Recheneinrichtung kann dabei auch dazu dienen ein Software Defined Radio umzusetzen.

Eine Recheneinrichtung kann jedwede Einrichtung sein, die ausgebildet ist, um zumindest eines der genannten Signale zu verarbeiten. Beispielsweise kann die Recheneinrichtung ein Prozessor, einASIC, ein FPGA, ein digitaler Signalprozessor, ein Hauptprozessor (CPU von engl.: "Central Processing Unit"), ein Multizweckprozessor (MPP von engl.: "Multi Purpose Prozessor") oder Ähnliches sein.

Entsprechend einer Ausführungsform der V2X Kommunikationsvorrichtung ist die Recheneinrichtung konfiguriert die Erfassung des Temperaturwerts mittels der Temperaturerfassungseinrichtung vorzunehmen und die Verifizierungseinrichtung zur Ausführung des Verfahrens anzusteuern.

In einer Weiterbildung der angegebenen Vorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Die Erfindung betrifft weiter die Verwendung einer Ausführungsform der Verifizierungseinrichtung bzw. der V2X Kommunikationsvorrichtung gemäß der Erfindung in einem Fahrzeug in Verbindung mit einer Infrastruktureinrichtung.

Das Fahrzeug kann ein Kraftfahrzeug, insbesondere ein Personenkraftfahrzeug, ein Lastkraftfahrzeug, ein Motorrad, ein Elektrokraftfahrzeug oder ein Hybridkraftfahrzeug, ein Wasserfahrzeug oder ein Luftfahrzeug sein.

Weiterhin betrifft die Erfindung ein zu den Ausführungsformen der beschriebenen Verifizierungseinrichtung korrespondierendes Verfahren aufweisend die Schritte:
- Empfang von V2X Nachrichten mittels einer Empfangseinrichtung einer V2X Kommunikationsvorrichtung,
- Erfassen eines Temperaturwerts bezüglich der V2X Kommunikationsvorrichtung,
- Bestimmen einer Anzahl zu verifizierender empfangener V2X Nachrichten in Abhängigkeit des ermittelten Temperaturwerts,
- Verifikation der zu verifizierenden empfangenen V2X Nachrichten mittels einer Verifizierungseinrichtung der V2X Kommunikationsvorrichtung.
Weitere Ausführungsformen des Verfahrens ergeben sich aus den Ausführungen zur den Ausführungsformen der Verifizierungseinrichtung gemäß der Erfindung.

Einige besonders vorteilhafte Ausgestaltungen der Erfindung sind in den Unteransprüchen angegeben. Weitere bevorzugte Ausführungsformen ergeben sich auch aus der nachfolgenden Beschreibung von Ausführungsbeispielen an Hand von Figuren.

In schematischer Darstellung zeigen:
- Fig. 1: ein Ausführungsbeispiel der Vorrichtung zur Fahrzeug-zu-X Kommunikation gemäß der Erfindung, umfassend ein Ausführungsbeispiel der Verifikationseinrichtung gemäß der Erfindung und
- Fig. 2: ein Ausführungsbeispiel des Verfahrens gemäß der Erfindung.

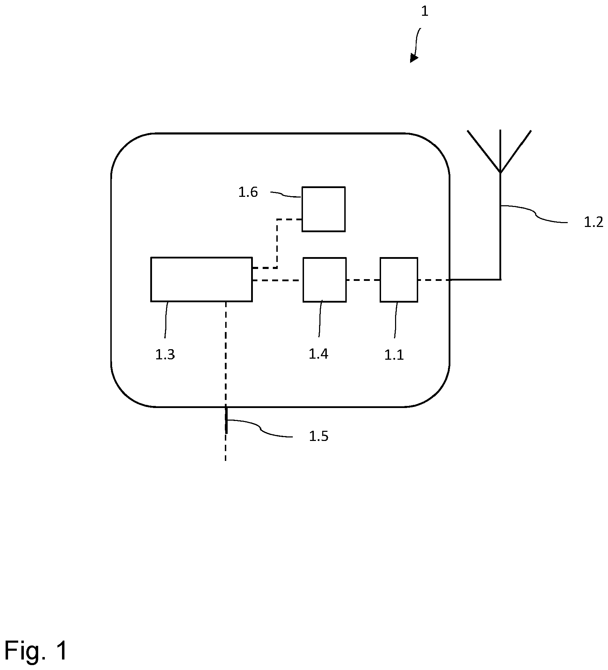

Die Fig. 1 zeigt ein Ausführungsbeispiel der Vorrichtung 1 zur Fahrzeug-zu-X (V2X) Kommunikation gemäß der Erfindung, umfassend eine Empfangseinrichtung 1.1 zum Empfang von V2X Nachrichten mit einer Antenne 1.2, eine Recheneinrichtung 1.3 zur Verarbeitung empfangener und/oder auszusendender V2X Nachrichten und eine Verifizierungseinrichtung 1.4 gemäß einer Ausführungsform der Erfindung. Mittels eines Datenübertragungsmittels 1.5 kann die V2X Kommunikationsvorrichtung zur Datenkommunikation mit weiteren Steuereinrichtungen weiterer Systeme, insbesondere eines Fahrzeugs, ausgebildet sein. Außerdem umfasst die V2X Kommunikationsvorrichtung 1 eine Temperaturerfassungseinrichtung 1.6 zur Erfassung eines Temperaturwerts der V2X Kommunikationsvorrichtung 1 bzw. der Verifikationseinrichtung 1.4. Die Erfassung kann hierbei durch die Recheneinrichtung 1.3 und/oder die Verifizierungseinrichtung erfolgen. Die Bestimmung des Temperaturwerts kann hierbei beispielsgemäß mittels eines Temperatursensors und/oder indirekt über die Bestimmung der Leistungsaufnahme der V2X Kommunikationsvorrichtung 1 oder der Verifikationseinrichtung 1.4, welche mit der Temperatur beispielsweise innerhalb eines Gehäuses der V2X Kommunikationsvorrichtung 1 korrelieren kann, vorgenommen werden. Die Verifizierungseinrichtung 1.2 ist konfiguriert die Verifizierung der mittels der Empfangseinrichtung 1.1 empfangenen V2X Nachrichten in Abhängigkeit des ermittelten Temperaturwerts vorzunehmen. Insbesondere wird hierbei die Anzahl der zu verifizierenden V2X Nachrichten in Abhängigkeit des Temperaturwerts angepasst, wobei grundsätzlich mit steigender Temperatur die Eigenerwärmung der Verifizierungseinrichtung reduziert wird, was zweckmäßigerweise durch Reduktion der Anzahl zu verifizierender empfangener V2X Nachrichten erreicht wird.

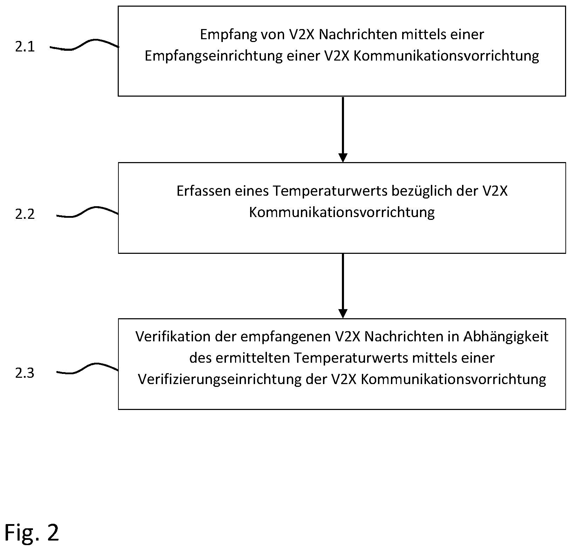

Die Fig. 2 zeigt in Form eines Ablaufdiagramms ein Ausführungsbeispiel des Verfahrens gemäß der Erfindung, wobei in einem Schritt 2.1 V2X Nachrichten mittels einer Empfangseinrichtung einer V2X Kommunikationsvorrichtung empfangen werden. In einem Schritt 2.2 wird ein Temperaturwert bezüglich der V2X Kommunikationsvorrichtung mittels einer Temperaturerfassungseinrichtung erfasst und in einem Schritt 2.3 erfolgt eine Verifikation der empfangenen V2X Nachrichten in Abhängigkeit des ermittelten Temperaturwerts mittels einer Verifizierungseinrichtung der V2X Kommunikationsvorrichtung.

Allgemein sei darauf hingewiesen, dass unter Fahrzeug-zu-X Kommunikation insbesondere eine direkte Kommunikation zwischen Fahrzeugen und/oder zwischen Fahrzeugen und Infrastruktureinrichtungen verstanden wird. Beispielsweise kann es sich also um Fahrzeug-zu-Fahrzeug Kommunikation oder um Fahrzeug-zu-Infrastruktur Kommunikation handeln. Sofern im Rahmen dieser Anmeldung auf eine Kommunikation zwischen Fahrzeugen Bezug genommen wird, so kann diese grundsätzlich beispielsweise im Rahmen einer Fahrzeug-zu-Fahrzeug Kommunikation erfolgen, welche typischerweise ohne Vermittlung durch ein Mobilfunknetz oder eine ähnliche externe Infrastruktur erfolgt und welche deshalb von anderen Lösungen, welche beispielsweise auf ein Mobilfunknetz aufbauen, abzugrenzen ist. Beispielsweise kann eine Fahrzeug-zu-X Kommunikation unter Verwendung der Standards IEEE 802.11p oder IEEE 1609.4 oder 4G oder 5G, insbesondere auch PC5 oder sidelink, erfolgen. Eine Fahrzeug-zu-X Kommunikation kann auch als C2X-Kommunikation oder V2X-Kommunikation bezeichnet werden. Die Teilbereiche können als C2C (Car-to-Car), V2V (Vehicle-to-Vehicle) oder C2I (Car-to-Infrastructure), V2I (Vehicle-to-Infrastrukture) bezeichnet werden. Die Erfindung schließt Fahrzeug-zu-X Kommunikation mit Vermittlung beispielsweise über ein Mobilfunknetz, sog. Cellular-V2X bzw. C-V2X, ausdrücklich mit ein.

## Patentansprüche

1. Verifizierungseinrichtung (1.4) für eine Fahrzeug-zu-X, V2X, Kommunikationsvorrichtung (1), ausgebildet, empfangene V2X Nachrichten zu verifizieren, **dadurch gekennzeichnet, dass** die Verifizierungseinrichtung (1.4) konfiguriert ist, eine Anzahl zu verifizierender empfangener V2X Nachrichten in Abhängigkeit eines ermittelten Temperaturwerts der V2X Kommunikationsvorrichtung (1) zu bestimmen und die Verifizierung der bestimmten Anzahl zu verifizierender empfangener V2X Nachrichten vorzunehmen.

2. Verifizierungseinrichtung gemäß Anspruch 1, konfiguriert, die für die Verifizierung empfangener V2X Nachrichten eingesetzten Rechenressourcen der Verifizierungseinrichtung in Abhängigkeit des ermittelten Temperaturwerts anzupassen.

3. Verifizierungseinrichtung gemäß Anspruch 2, konfiguriert, die für die Verifizierung empfangener V2X Nachrichten eingesetzten Rechenressourcen reziprok zum ermittelten Temperaturwert anzupassen.

4. Verifizierungseinrichtung gemäß einem der Ansprüche 2 oder 3, konfiguriert die für die Verifizierung empfangener V2X Nachrichten eingesetzten Rechenressourcen durch Änderung der Anzahl zu verifizierender empfangener V2X Nachrichten innerhalb eines Zeitintervalls bezogen auf eine Gesamtanzahl empfangener V2X Nachrichten innerhalb des Zeitintervalls vorzunehmen.

5. Verifizierungseinrichtung gemäß einem der vorhergehenden Ansprüche, konfiguriert die Anzahl zu verifizierender empfangenen V2X Nachrichten innerhalb eines Zeitintervalls bezogen auf eine Gesamtanzahl empfangener V2X Nachrichten innerhalb des Zeitintervalls reziprok zum ermittelten Temperaturwert anzupassen.

6. Verifizierungseinrichtung gemäß einem der vorhergehenden Ansprüche, konfiguriert die Änderung der Anzahl zu verifizierender empfangener V2X Nachrichten innerhalb eines Zeitintervalls bezogen auf eine Gesamtanzahl empfangener V2X Nachrichten innerhalb des Zeitintervalls durch Änderung eines ausgeführten Verifizierungsschemas vorzunehmen.

7. Verifizierungseinrichtung gemäß einem der vorhergehenden Ansprüche, konfiguriert ein erstes Verifizierungsschema oder ein zweites Verifizierungsschema auszuführen, wobei bei der Ausführung des ersten Verifizierungsschemas im Vergleich zum zweiten Verifizierungsschema eine größere Anzahl zu verifizierender empfangener V2X Nachrichten innerhalb eines Zeitintervalls bezogen auf eine Gesamtanzahl empfangener V2X Nachrichten innerhalb des Zeitintervalls verifiziert wird, und wobei die Verifizierungseinrichtung konfiguriert ist, von der Ausführung des ersten Verifizierungsschemas zur Ausführung in das zweite Verifizierungsschema zu wechseln, wenn ein ermittelter Temperaturwert einen vorgegebenen ersten Temperaturschwellwert überschreitet.

8. Verifizierungseinrichtung gemäß Anspruch 7, konfiguriert in das erste Verifizierungsschema zu wechseln, wenn der Temperaturwert einen vorgegebenen zweiten Temperaturschwellwert unterschreitet.

9. Verifizierungseinrichtung gemäß einem der Ansprüche 6 bis 8, wobei als erstes Verifizierungsschema ausführbar ist:
- Verifizierung sämtlicher eingehender V2X Nachrichten, und
als erstes Verifizierungsschema oder als zweites Verifizierungsschema ausführbar ist:
- Verifizierung lediglich des Teils der eingehenden V2X Nachrichten, welche eine oder mehrere vorbestimmte Bedingungen erfüllen und/oder
- Verifizierung eingehender V2X Nachrichten auf Basis zumindest einer anderen auf den Nachrichteninhalt bezogenen Vorgehensweise.

10. Verifizierungseinrichtung gemäß einem der vorhergehenden Ansprüche, konfiguriert den Temperaturwert mittels einer Temperaturerfassungseinrichtung und/oder unter Heranziehung zumindest eines weiteren Größenwerts zumindest einer physikalischen Größe zu ermitteln.

11. Verifizierungseinrichtung gemäß einem der vorhergehenden Ansprüche, konfiguriert eine Temperatur und/oder Leistungsaufnahme und/oder Stromaufnahme der Verifizierungseinrichtung zur Ermittlung des Temperaturwert heranzuziehen.

12. Fahrzeug-zu-X, V2X, Kommunikationsvorrichtung (1), umfassend eine Empfangseinrichtung (1.1) zum Empfang von V2X Nachrichten, eine Recheneinrichtung (1.3) zur Verarbeitung empfangener und/oder auszusendender V2X Nachrichten, eine Temperaturerfassungseinrichtung (1.6) und eine Verifizierungseinrichtung (1.4) gemäß einem der Ansprüche 1 bis 11.

13. Verfahren aufweisend die Schritte:
- Empfang (2.1) von V2X Nachrichten mittels einer Empfangseinrichtung einer V2X Kommunikationsvorrichtung,
- Erfassen (2.2) eines Temperaturwerts bezüglich der V2X Kommunikationsvorrichtung, **gekennzeichnet durch**,
- Bestimmen einer Anzahl zu verifizierender empfangener V2X Nachrichten in Abhängigkeit des ermittelten Temperaturwerts,
- Verifikation (2.3) der zu verifizierenden empfangenen V2X Nachrichten mittels einer Verifizierungseinrichtung der V2X Kommunikationsvorrichtung.

14. Verwendung der Verifizierungseinrichtung gemäß einem der Ansprüche 1 bis 11 und/oder der V2X Kommunikationsvorrichtung gemäß Anspruch 12 in einem Fahrzeug oder in Verbindung mit einer Infrastruktureinrichtung.

## Claims

1. Verification device (1.4) for a vehicle-to-X, V2X, communication apparatus (1), designed to verify received V2X messages, **characterized in that** the verification device (1.4) is configured to determine a number of received V2X messages to be verified on the basis of a determined temperature value of the V2X communication apparatus (1) and to verify the determined number of received V2X messages to be verified.

2. Verification device according to Claim 1, configured to adapt the computing resources of the verification device, which are used to verify received V2X messages, on the basis of the determined temperature value.

3. Verification device according to Claim 2, configured to adapt the computing resources used to verify received V2X messages in a reciprocal manner with respect to the determined temperature value.

4. Verification device according to either of Claims 2 and 3, configured to prompt the computing resources used to verify received V2X messages by changing the number of received V2X messages to be verified within an interval of time based on a total number of received V2X messages within the interval of time.

5. Verification device according to one of the preceding claims, configured to adapt the number of received V2X messages to be verified within an interval of time based on a total number of received V2X messages within the interval of time in a reciprocal manner with respect to the determined temperature value.

6. Verification device according to one of the preceding claims, configured to change the number of received V2X messages to be verified within an interval of time based on a total number of received V2X messages within the interval of time by changing a verification scheme that is performed.

7. Verification device according to one of the preceding claims, configured to perform a first verification scheme or a second verification scheme, wherein, when performing the first verification scheme in comparison with the second verification scheme, a greater number of received V2X messages to be verified are verified within an interval of time based on a total number of received V2X messages within the interval of time, and wherein the verification device is configured to change from the performance of the first verification scheme to the performance of the second verification scheme if a determined temperature value exceeds a predefined first temperature threshold value.

8. Verification device according to Claim 7, configured to change to the first verification scheme if the temperature value falls below a predefined second temperature threshold value.

9. Verification device according to one of Claims 6 to 8, wherein the following can be performed as the first verification scheme:
- verification of all incoming V2X messages, and
the following can be performed as the first verification scheme or as the second verification scheme:
- verification only of some of the incoming V2X messages which satisfy one or more predetermined conditions, and/or
- verification of incoming V2X messages on the basis of at least one other procedure based on the message content.

10. Verification device according to one of the preceding claims, configured to determine the temperature value by means of a temperature capture device and/or using at least one further variable value of at least one physical variable.

11. Verification device according to one of the preceding claims, configured to use a temperature and/or power consumption and/or current consumption of the verification device to determine the temperature value.

12. Vehicle-to-X, V2X, communication apparatus (1) comprising a receiving device (1.1) for receiving V2X messages, a computing device (1.3) for processing received V2X messages and/or V2X messages to be transmitted, a temperature capture device (1.6) and a verification device (1.4) according to one of Claims 1 to 11.

13. Method having the steps of:
- receiving (2.1) V2X messages by means of a receiving device of a V2X communication apparatus,
- capturing (2.2) a temperature value of the V2X communication apparatus, **characterized by**
- determining a number of received V2X messages to be verified on the basis of the determined temperature value,
- verifying (2.3) the received V2X messages to be verified by means of a verification device of the V2X communication apparatus.

14. Use of the verification device according to one of Claims 1 to 11 and/or of the V2X communication apparatus according to Claim 12 in a vehicle or in connection with an infrastructure device.

## Revendications

1. Dispositif de vérification (1.4) pour un dispositif de communication (1) de véhicule à X, V2X, réalisé pour vérifier des messages V2X reçus,
**caractérisé en ce que** le dispositif de vérification (1.4) est configuré pour déterminer un certain nombre de messages V2X reçus à vérifier en fonction d'une valeur de température établie du dispositif de communication V2X (1) et pour procéder à la vérification du nombre déterminé de messages V2X reçus à vérifier.

2. Dispositif de vérification selon la revendication 1, configuré pour adapter les ressources de calcul du dispositif de vérification, mises en oeuvre pour la vérification de messages V2X reçus, en fonction de la valeur de température établie.

3. Dispositif de vérification selon la revendication 2, configuré pour adapter les ressources de calcul, mises en oeuvre pour la vérification de messages V2X reçus, de manière réciproque à la valeur de température établie.

4. Dispositif de vérification selon l'une quelconque des revendications 2 ou 3, configuré pour actionner les ressources de calcul, mises en oeuvre pour la vérification de messages V2X reçus, par la modification du nombre de messages V2X reçus à vérifier dans un intervalle de temps par rapport à un nombre total de messages V2X reçus dans l'intervalle de temps.

5. Dispositif de vérification selon l'une quelconque des revendications précédentes, configuré pour adapter le nombre de messages V2X reçus à vérifier dans un intervalle de temps par rapport à un nombre total de messages V2X reçus dans l'intervalle de temps de manière réciproque à la valeur de température établie.

6. Dispositif de vérification selon l'une quelconque des revendications précédentes, configuré pour procéder à la modification du nombre de messages V2X reçus à vérifier dans un intervalle de temps par rapport à un nombre total de messages V2X reçus dans l'intervalle de temps par la modification d'un schéma de vérification exécuté.

7. Dispositif de vérification selon l'une quelconque des revendications précédentes, configuré pour exécuter un premier schéma de vérification ou un deuxième schéma de vérification, dans lequel, lors de l'exécution du premier schéma de vérification, en comparaison avec le deuxième schéma de vérification, un plus grand nombre de messages V2X reçus à vérifier dans un intervalle de temps est vérifié par rapport à un nombre total de messages V2X reçus dans l'intervalle de temps, et dans lequel le dispositif de vérification est configuré pour passer de l'exécution du premier schéma de vérification à l'exécution du deuxième schéma de vérification si une valeur de température établie dépasse une première valeur seuil de température prédéfinie.

8. Dispositif de vérification selon la revendication 7, configuré pour passer au premier schéma de vérification si la valeur de température est inférieure à une deuxième valeur seuil de température prédéfinie.

9. Dispositif de vérification selon l'une quelconque des revendications 6 à 8, dans lequel
en tant que premier schéma de vérification, on peut exécuter :
- la vérification de tous les messages V2X entrants, et
en tant que premier schéma de vérification ou en tant que deuxième schéma de vérification, on peut exécuter :
- la vérification uniquement de la partie des messages V2X entrants qui satisfont une ou plusieurs conditions prédéterminées, et/ou
- la vérification de messages V2X entrants sur la base d'au moins d'une autre façon de procéder relative au contenu de message.

10. Dispositif de vérification selon l'une quelconque des revendications précédentes, configuré pour établir la valeur de température au moyen d'un dispositif de détection de température et/ou en faisant appel à au moins une autre valeur de grandeur d'au moins une grandeur physique.

11. Dispositif de vérification selon l'une quelconque des revendications précédentes, configuré pour faire appel à une température et/ou à une puissance absorbée et/ou à une consommation de courant du dispositif de vérification pour établir la valeur de température.

12. Dispositif de communication (1) de véhicule à X, V2X, comprenant un dispositif de réception (1.1) pour recevoir des messages V2X, un dispositif de calcul (1.3) pour traiter des messages V2X reçus et/ou à émettre, un dispositif de détection de température (1.6), et un dispositif de vérification (1.4) selon l'une quelconque des revendications 1 à 11.

13. Procédé, présentant les étapes consistant à :
- recevoir (2.1) des messages V2X au moyen d'un dispositif de réception d'un dispositif de communication V2X,
- détecter (2.2) une valeur de température concernant le dispositif de communication V2X,
**caractérisé par** les étapes consistant à
- déterminer un nombre de messages V2X reçus à vérifier en fonction de la valeur de température établie,
- vérifier (2.3) les messages V2X reçus à vérifier au moyen d'un dispositif de vérification du dispositif de communication V2X.

14. Utilisation du dispositif de vérification selon l'une quelconque des revendications 1 à 11 et/ou du dispositif de communication V2X selon la revendication 12 dans un véhicule ou en relation avec un équipement d'infrastructure.
